# EUROPÄISCHE PATENTANMELDUNG

(11) **EP 1 359 124 A1**
(43) Veröffentlichungstag der Anmeldung: **05.11.2003**
(21) Anmeldenummer: 02009569.1
(22) Anmeldetag: 26.04.2002
(51) Int. Cl.: C02F 1/44

(54) **Verfahren und Vorrichtung zum Reinigen von Trinkwasser mit einer chlorbeständigen Nanofiltrationsmembran**

(71) Anmelder: VA TECH WABAG GmbH, 1211 Wien (AT)
(72) Erfinder: Pouresmaeil, Babak, 1040 Wien (AT); Hagen, Klaus, 95326 Kulmbach (DE); Müller, Heinz, 1100 Wien (AT); Ürmös, Marcus, 1200 Wien (AT)
(74) Vertreter: VA TECH Patente GmbH & Co

(57) **Zusammenfassung**

Die erfindung betrifft ein Verfahren sowie eine entsprechende Vorrichtung zum Reinigen von Trinkwasser, bei welchem das zu behandelnde Trinkwasser (A) einer Nanofiltration unterworfen wird, und ist dadurch gekennzeichnet, dass das zu behandelnde Trinkwasser (A) durch eine chlorbeständige Nanofiltrationsmembran (19) geleitet wird. Dadurch wird ein Verfahren bzw. eine Vorrichtung unter Verwendung von Nanofiltration zur Verfügung gestellt, welche ohne vorherige Chlorelimination zur weiteren Reinigung von bereits chloriertem Trinkwasser geeignet sind.

## Beschreibung

Die gegenständliche Erfindung betrifft ein Verfahren zum Reinigen von Trinkwasser, bei welchem das zu behandelnde Trinkwasser einer Nanofiltration unterworfen wird, sowie eine entsprechende Vorrichtung zum Reinigen von Trinkwasser, umfassend zumindest eine Nanofiltrationsmembran, eine Einrichtung zum Zuführen des zu behandelnden Trinkwassers und eine Einrichtung zum Abführen des gereinigten Trinkwassers nach der Filtrationsmembran.

Derartige Verfahren bzw. Vorrichtungen sind beispielsweise aus der Veröffentlichung WO 97/14659 bekannt, welche ein Verfahren zur Vorbehandlung von Wasser durch Nanofiltration zeigt. Allerdings wird bei diesem Verfahren etwaiges im Rohwasser enthaltenes Chlor vor der Nanofiltration abgeschieden. Entsprechend ist auch nach der Nanofiltration eine Desinfektion des filtrierten Wassers vorgesehen.

Das Verfahren aus der WO 97/14659 wäre jedoch ohne die Elimination von Chlor für die weitere Aufbereitung von bereits chloriertem Trinkwasser nicht geeignet, weil die Membranen durch das im zu reinigenden Wasser enthaltene Chlor rasch zersetzt werden würden.

Eine Aufgabe der vorliegenden Erfindung besteht nun darin, ein Verfahren bzw. eine Vorrichtung unter Verwendung von Nanofiltration zur Verfügung zu stellen, welche ohne vorherige Chlorelimination zur weiteren Reinigung von bereits chloriertem Trinkwasser geeignet ist.

Die Aufgabe wird durch das Verfahren gemäß Anspruch 1 bzw. die Vorrichtung gemäß Anspruch 5 gelöst.

Eine chlorbeständige Membran kann über die erwartete Lebensdauer der Membran einer bestehenden Chlorbelastung standhalten, ohne einen Schaden am Membranmaterial zu erleiden und ohne dass dadurch eine Änderung in den Trenneigenschaften der Membran eintritt. Beispiele für Membranmaterialien, welche die gewünschte Eigenschaft aufweisen, sind Polysulfon oder ein Zellulose-Triacetat/Diacetat-Verbund.

Die Nanofiltration unterscheidet sich von der Ultrafiltration dadurch, dass bei der Ultrafiltration nur eine Abtrennung von Partikeln (z.B. aus den Wänden der Wasserleitung), Bakterien und Viren möglich ist, während bei der Nanofiltration auch eine selektive Abtrennung von lonen und damit eine Teilenthärtung des Wassers stattfindet. Teilweise werden auch organische Verbindungen abgetrennt. Einwertige lonen können jedoch durch die Membran hindurchtreten, so etwa Chloridionen.

Die Nanofiltration unterscheidet sich von der Umkehrosmose dadurch, dass bei der Umkehrosmose eine fast vollständige Abtrennung gelöster Stoffe erfolgt. Die Umkehrosmose trennt organische Moleküle ab einem Molekulargewicht von 100 g/mol ab, wogegen die Trenngrenze der Nanofiltration zwischen 300 und 500 g/mol liegt. Ionen werden generell im hohem Masse von einer Umkehrosmose zurückgehalten, während mit der Nanofiltration eine fraktionierte lonentrennung möglich ist. Das bedeutet, dass zweiwertige lonen zu über 98% zurückgehalten werden, während der Rückhalt von einwertigen lonen nur zu etwa 30 - 60% gegeben ist. Das Permeat einer Umkehrosmose hat die Qualität von destilliertem Wasser und ist ohne Nachaufbereitung nicht zum Genuss durch den Menschen geeignet.

Die gegenständliche Erfindung bedient sich der Nanofiltration, weil dadurch das bereits im zu behandelnden Wasser enthaltene Chlor durch die Filtrationsmembranen hindurchtreten kann und auch weiterhin das gereinigte Wasser desinfiziert, ohne dass nach der Nanofiltration erneut ein Desinfektionsmittel zugegeben werden muss.

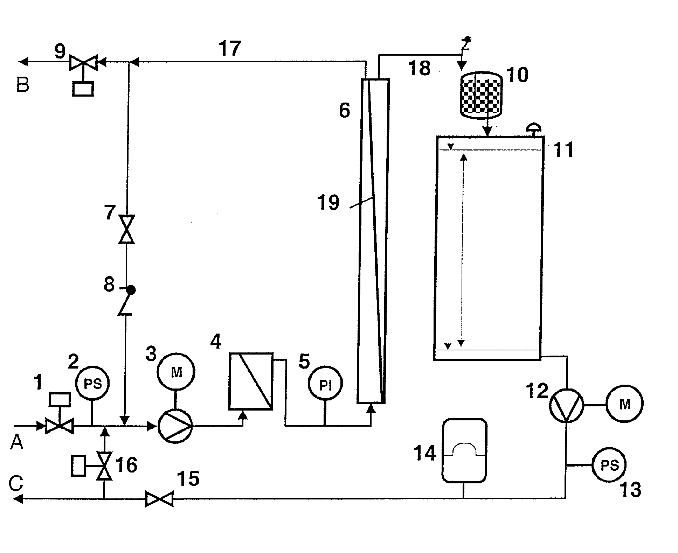

Eine erfindungsgemäße Vorrichtung ist in der Figur beispielhaft und schematisch dargestellt.

Über Anschluß A, an dem eine Verbindung zur kommunalen Trinkwasserversorgung hergestellt wird, wird das zu behandelnde Trinkwasser (Feed) der Speisepumpe (Feed-Pumpe) 3 zugeführt. Sollte aus der Feed-Leitung kein Wasser bezogen werden können, so wird durch einen Druckschalter 2 verhindert, daß die Feed-Pumpe 3 eingeschalten wird. Die Feed-Pumpe 3 erzeugt, in Verbindung mit den Ventilen 7 und 9, den benötigten Vordruck an der Membran 19 von 5 - 10 bar.

Um die Membran 19, welche in einem Druckrohr 6 angeordnet ist, vor grobkörnigen Verunreinigungen zu schützen, wird der Feed über ein Vorfilter 4 gereinigt.

Der eingebaute Drucksensor 5 hat die Aufgabe, den Leitungsdruck vor der Membran 19 zu überwachen und bei Erreichen eines maximal zulässigen Höchstdruckes die Feed-Pumpe 3 auszuschalten.

An der Membran 19 kommt es zur Auftrennung des Feed in einen angereicherten Konzentratstrom 17 und in einen abgereicherten Permeatstrom 18 (gereinigtes Trinkwasser). Bei den aufkonzentrierten bzw. entfernten Stoffen, handelt es sich um Inhaltsstoffe des Wassers (Salze, Mikroorganismen und sonstige Verbindungen).

Um eine bessere Ausbeute zu erlangen, wird ein Teil des Konzentratstromes 17 dem Feed wieder zugeführt. Nur ein geringer Teil des Konzentrates wird über das Ventil 9 und den Anschluss B abgelassen.

Die Ausbeute, das Verhältnis zwischen zugeleitetem Feed A und gewonnenem Permeat 18, kann über das Ventil 9 eingestellt werden.

Das gewonnene Permeat 18 wird in einem Permeattank 11 gesammelt und dem Verbraucher zur Verfügung gestellt. Da es an der Membran 19 zu einer Teilentsalzung des Wassers kommt, wird das sogenannte Kalk-Kohlensäure-Gleichgewicht des Wassers wieder hergestellt, indem das Permeat 18 über einen mineralischen Schüttkörper 10 geleitet wird.

Die Wasserentnahme aus dem Permeattank 11 erfolgt über den Anschluss C, der an die Hauswasserleitung angeschlossen wird. Der Leitungsdruck wird durch eine Pumpe 12 und einen Windkessel 14 erzeugt. Dieser Leitungsdruck kann über einen Druckschalter 13, der das Schaltspiel von Pumpe 12 steuert, frei eingestellt werden.

In regelmäßigen Zeitintervallen wird die gesamte Konzentratleitung 17 mit produziertem Permeat 18 gespült. Zu diesem Zweck wird das Ventil 1 geschlossen und über das Ventil 16 eine Verbindung zwischen der Permeat- und der Feed-Leitung hergestellt. Nachdem das Ventil 9 geöffnet wurde, erfolgt ein Entleeren der Konzentratleitung 17 durch den von Pumpe 12 erzeugten Druck. Eine Rückschlagklappe 8 in der Konzentratleitung 17 stellt sicher, daß der ganze Konzentratkreislauf über das Druckrohr 6 gespült wird.

Eine erfindungsgemäße Membran 19 weist beispielsweise einen Rückhalt von 60% NaCI auf (Betriebsdruck: 14 bar, Betriebstemperatur von 25°C, Ausbeute: 85%).

Die Erfindung eignet sich zur Aufbereitung von Trinkwasser eines kommunalen Wasserleitungsnetzes. Die erfindungsgemäße Vorrichtung kann platzsparend in einem Behälter von 1 m³ untergebracht werden und liefert etwa 20 Liter gereinigtes Trinkwasser pro Stunde und m² eingesetzter Membranfläche. Falls der Gehalt an freiem Chlor im behandelten Trinkwasser unter 0,1 mg/l liegt, muss dem behandelten Trinkwasser Chlor zugegeben werden.

## Patentansprüche

1. Verfahren zum Reinigen von Trinkwasser, bei welchem das zu behandelnde Trinkwasser (A) einer Nanofiltration (6) unterworfen wird, **dadurch gekennzeichnet, dass** das zu behandelnde Trinkwasser durch eine chlorbeständige Nanofiltrationsmembran (19) geleitet wird.

2. Verfahren nach Anspruch 1, **dadurch gekennzeichnet, dass** das durch die Nanofiltrationsmembran (19) gereinigte Trinkwasser (18) zur Herstellung des Kalk-Kohlensäure-Gleichgewichts durch einen mineralischen Schüttkörper (11) geführt wird.

3. Verfahren nach Anspruch 1 oder 2, **dadurch gekennzeichnet, dass** ein Teil des von der Nanofiltrationsmembran zurückgehaltenen Konzentrats (17) dem zu behandelnden Trinkwasser (A) zugemischt wird.

4. Verfahren nach einem der Ansprüche 1 bis 3, **dadurch gekennzeichnet, dass** durch die Nanofiltrationsmembran (19) gereinigtes Trinkwasser (18) zum Spülen von Leitungen für das Konzentrat (17) verwendet wird.

5. Vorrichtung zum Reinigen von Trinkwasser, umfassend zumindest eine Nanofiltrationsmembran (19), eine Einrichtung (1, 2, 3, 4, 5) zum Zuführen des zu behandelnden Trinkwassers (A), und eine Einrichtung (10, 11, 12, 13, 14, 15) zum Abführen des gereinigten Trinkwassers (18) nach der Filtrationsmembran (19), **dadurch gekennzeichnet, dass** die Filtrationsmembran (19) als chlorbeständige Nanofiltrationsmembran ausgebildet ist.

6. Vorrichtung nach Anspruch 5, **dadurch gekennzeichnet, dass** die Einrichtung zum Zuführen des zu behandelnden Trinkwassers (A) eine Vorrichtung, wie etwa eine Pumpe (3), zur Beaufschlagung der Nanofiltrationsmembran (19) mit einem einstellbaren Druck enthält.

7. Vorrichtung nach Anspruch 5 oder 6, **dadurch gekennzeichnet, dass** die Einrichtung zum Abführen des gereinigten Trinkwassers (18) eine Pumpe (12) enthält.

8. Vorrichtung nach einem der Ansprüche 5 bis 7, **dadurch gekennzeichnet, dass** die Einrichtung zum Abführen des gereinigten Trinkwassers (18) einen Windkessel (14) enthält.

9. Vorrichtung nach einem der Ansprüche 5 bis 8, **dadurch gekennzeichnet, dass** die Einrichtung zum Abführen des gereinigten Trinkwassers (18) einen mineralischen Schüttkörper (11) enthält.

10. Vorrichtung nach einem der Ansprüche 5 bis 9, **dadurch gekennzeichnet, dass** die Einrichtung zum Abführen des gereinigten Trinkwassers (18) eine absperrbare Verbindung (16) zur Einrichtung zum Zuführen des zu behandelnden Trinkwassers (A) aufweist.

11. Vorrichtung nach einem der Ansprüche 5 bis 10, **dadurch gekennzeichnet, dass** eine Einrichtung zum Abführen des Konzentrats (17) der Nanofiltrationsmembran (19) vorgesehen ist, welche eine verschliessbare Verbindung (8) zur Einrichtung zum Zuführen des zu behandelnden Trinkwassers (A) aufweist.

12. Vorrichtung nach einem der Ansprüche 5 bis 11, **dadurch gekennzeichnet, dass** die Nanofiltrationsmembran (19) einen Rückhalt von etwa 60% NaCI bei den Betriebsparametern Druck 14 bar, Temperatur 25°C und Ausbeute 85% aufweist.
